# EUROPÄISCHE PATENTANMELDUNG

(11) **EP 1 609 760 A1**
(43) Veröffentlichungstag der Anmeldung: **28.12.2005**
(21) Anmeldenummer: 04014637.5
(22) Anmeldetag: 22.06.2004
(51) Int. Cl.: C01G 49/14

(54) **Verfahren zur Gewinnung von Eisen(II)sulfatheptahydrat**

(71) Anmelder: Kehrmann, Alexander, 46509 Xanten (DE)
(72) Erfinder: Kehrmann, Alexander, 46509 Xanten (DE)
(74) Vertreter: Ksoll, Peter

(57) **Zusammenfassung**

Es wird ein Verfahren zur Gewinnung von Eisen(II)sulfatheptahydrat aus Eisen(II)-sulfatmonohydrat vorgeschlagen, bei dem Eisen(II)-sulfatmonohydrat in einem Kristallisationsreaktor mit Wasser gemischt wird und zu Eisen(II)sulfatheptahydrat als Kristallisat reagiert, welches anschließend vom Wasser isoliert wird. Das zum Einsatz gelangende Eisen(II)sulfatmonohydrat wird aus einer Beizlösung BL aus Eisenchlorid, Salzsäure und Wasser gewonnen. Die Beizlösung BL wird in einem Fällreaktor 6 mit Schwefelsäure unter Überschuss von Schwefelsäure zu Eisen(II)sulfatmonohydrat und Salzsäure umgesetzt, wonach eine Trennung von Eisen(II)sulfatmonohydrat und Salzsäure erfolgt. Dem Fällreaktor 6 ist eine Destillationskolonne 2 vorgeschaltet. Das Eisen(II)sulfatmonohydrat wird dann entfeuchtet und dem Kristallisationsreaktor 14 zugeführt, wo unter Zugabe von Wasser im Überschuss die Umwandlung zu Eisen(II)sulfatheptahydrat erfolgt.

## Beschreibung

Die Erfindung betrifft ein Verfahren zur Gewinnung von Eisen(II)sulfatheptahydrat aus Eisen(II)sulfatmonohydrat, wobei insbesondere gebrauchte Beize aus der Stahlindustrie aufgearbeitet werden soll.

Eisen(II)sulfatheptahydrat kommt als Chromatreduzierer zur Bindung schädlicher Chromverbindungen in Zement oder bei der Bodenaufbereitung zum Einsatz. Des Weiteren kann Eisen(II)sulfatheptahydrat als Dünger, zur Phosphatfällung in der Abwasserreinigung und zur Klärschlammkondentionierung oder als Rohstoff für die Produktion von Eisenoxid-Pigmenten verwendet werden.

In der Stahlindustrie beim Beizen von Metallblechen fallen große Mengen gebrauchter Beizlösungen an, deren Entsorgung sowohl unter umwelttechnischen als auch wirtschaftlichen Aspekten problematisch ist. Man ist daher bestrebt, die Beizlösungen weitestgehend aufzuarbeiten und einer sinnvollen Wieder- bzw. Weiterverwertung zuzuführen.

Durch die US-PS 5,417,955 zählt ein Verfahren und eine Anlage zur Aufbereitung einer Beizlösung zum Stand der Technik. Hierbei wird Salzsäure und Eisensulfat aus der Beizlösung gewonnen. Es erfolgt eine Fällung von Eisenchlorid aus der Beizlösung zu Eisen(II)sulfatmonohydrat durch Zugabe von Schwefelsäure in einem Fällreaktor. Das Eisen(II)sulfatmonohydrat wird anschließend durch Oxidation zu Eisen(III)sulfat umgewandelt.

Der Erfindung liegt die Aufgabe zugrunde, ein effizientes Verfahren zur Gewinnung von Eisen(II)sulfatheptahydrat aufzuzeigen, wobei insbesondere gebrauchte Beizlösung aus der Stahlindustrie aufbereitet werden soll.

Die Lösung dieser Aufgabe besteht nach der Erfindung in einem Verfahren gemäß Patentanspruch 1.

Der grundsätzliche Erfindungsgedanke sieht vor, Eisen(II)-sulfatmonohydrat in einem Kristallisationsreaktor mit Wasser im Überschuss zu mischen. Im Kristallisationsreaktor entsteht durch die Zugabe von Wasser nach einer Verweilzeit Eisen(II)sulfatheptahydrat (FeSO₄ · 7H₂O). Die Temperatur im Kristallisationsreaktor und die Verweilzeit ebenso wie der erforderliche Wasserüberschuss werden auf eine bestmögliche Kristallbildung abgestimmt. Das entstandene Kristallisat, also Eisen(II)sulfatheptahydrat in kristalliner Form wird anschließend vom Wasser isoliert.

Vorteilhafte Ausgestaltungen des grundsätzlichen Erfindungsgedankens zeigen die abhängigen Ansprüche 2 bis 8 auf.

In vorteilhafter Weise erfolgt die Isolierung des Kristallisats vom Wasser durch eine Filtration. Zweckmäßig kommt hier ein Bandfilter zum Einsatz. Möglich ist selbstverständlich auch der Einsatz einer Zentrifuge. Die abgefilterte Mutterlauge wird in den Kristallisationsreaktor zurückgefahren.

Gegebenenfalls kann das Eisen(II)sulfatheptahydrat nach der Isolierung vom Wasser noch gewaschen werden, um überschüssige Säureanteile auszuwaschen.

Das Eisen(II)sulfatmonohydrat kann beispielsweise aus der Titandioxidproduktion stammen, wo es als Filtersalz anfällt.

Im Rahmen der Erfindung ist vorzugsweise an die Aufarbeitung von gebrauchter Beizlösung aus der Stahlindustrie gedacht. Diese besteht in den Hauptbestandteilen aus Eisenchlorid (FeCl₂), Salzsäure (HCL) und Wasser (H₂O).

Das E isen(II)sulfatmonohydrat wird a us d er gebrauchten B eizlösung gewonnen. I n einem Fällungsreaktor wird hierbei die wässrige Beizlösung mit Schwefelsäure unter Überschuss von Schwefelsäure zu Eisen(II)sulfatmonohydrat und Salzsäure umgesetzt. Das Verhältnis von Beizlösung zu Schwefelsäure sollte zwischen 1:3 und 1:5 liegen. Die Beizlösung wird intensiv begast. Die heiße Gasphase aus Inerten, Wasser und Salzsäure wird einer Absorptionskolonne zugeführt. Dort wird Salzsäure ausgestrippt und einer Weiterverwendung zugeführt.

Im Fällungsreaktor entsteht eine Suspension, in der Eisen(II)sulfatmonohydrat als ungelöste Komponente vorliegt. Diese Suspension wird einem Filter zugeleitet, vorzugsweise kommt hier ein Bandfilter zum Einsatz. Das Filtrat gelangt zurück in den Reaktor. Das entfeuchtete Eisen(II)sulfatmonohydrat wird dem Kristallisationsreaktor zugeführt.

Je nach Säurekonzentration in der gebrauchten Beizlösung kann es zur Steigerung der Effizienz des Verfahrens vorteilhaft sein, den Anteil des Eisenchlorids in der Beizlösung durch eine Destillation zu erhöhen. Hierdurch kann die Qualität der gewonnenen Salze und die Ausfällung von Eisen(II)monohydrat verbessert und vergleichmäßigt werden

Zweckmäßigerweise sollte der Anteil von Eisenchlorid in der Beizlösung, die dem Fällreaktor zugeführt wird, größer oder gleich 25 % sein.

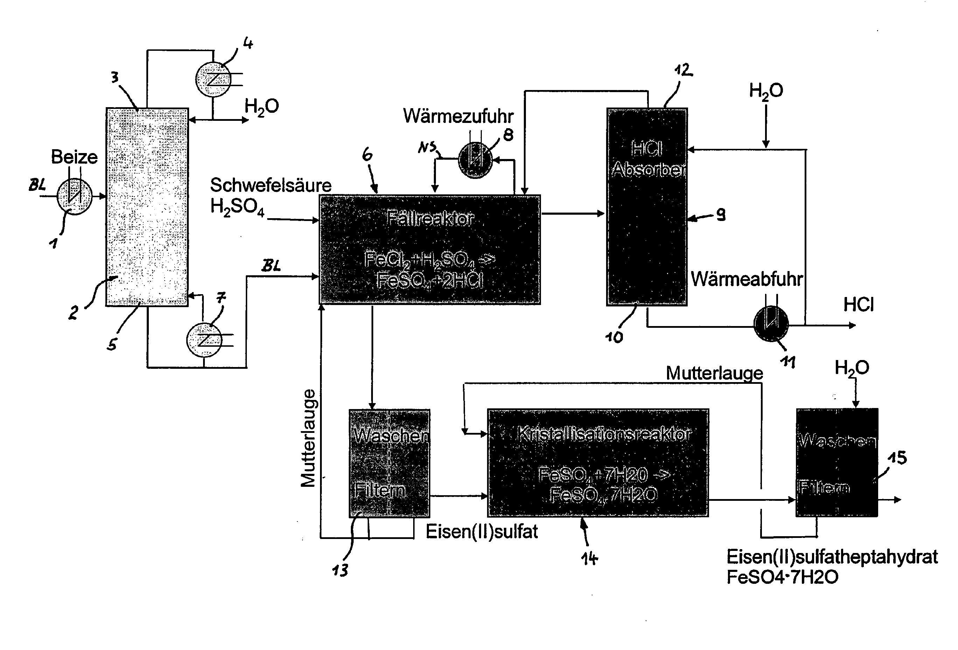

Die Erfindung ist nachfolgend anhand eines Ausführungsbeispiels näher beschrieben. In der Abbildung dargestellt ist ein Blockfließbild einer Anlage zur Aufbereitung von gebrauchter Beizlösung aus der Stahlindustrie.

Die Anlage und d as Verfahren dient zur Aufbereitung von gebrauchter B eizlösung aus der Stahlindustrie und zur Gewinnung von Eisen(II)sulfatheptahydrat.

Das Verfahren besteht aus vier Haupt-Verfahrensschritten, nämlich der Aufkonzentrierung der Beize, der Fällung von Eisen(II)sulfatmonohydrat, der Salzsäureabsorption und der Kristallisation von Eisen(II)sulfatmonohydrat zu Eisen(II)sulfatheptahydrat. Das Verfahren arbeitet nahezu abwasserfrei.

Die Konzentration der erzeugten Salzsäure ist direkt abhängig von der Konzentration der eingesetzten Beizlösung. Zur Vergleichmäßigung der Konzentration der Salzsäure und der Produktion von Eisen(II)sulfatmonohydrat wird dann eine Konzentration des Eisenchloridgehaltes in der Beizlösung vorgenommen. Hierzu wird die Beizlösung BL zunächst in einem Wärmeübertrager 1 auf ca. 95°C vorgewärmt und einer Destillationskolonne 2 zugeführt. In der Destillationskolonne 2 wird die Beizlösung BL aufgetrennt. Wasserdampf kann am Kopf 3 der Destillationskolonne 2 abgezogen werden und über einen Kühler 4 abgekühlt werden. Das Kondensat (Wasser) kann zumindest teilweise wieder in den Prozess zurückgeführt werden. Am Sumpf 5 d er Destillationskolonne 2 wird die a ufkonzentrierte Beize BL abgezogen und im nächsten Verfahrensschritt einem Fällreaktor 6 zugeführt. Ein Teil der Beizlösung wird über einen Verdampfer 7 verdampft und wieder am Sumpf 5 der Destillationskolonne 2 zugegeben.

Im Fällreaktor 6 wird die Beizlösung, bestehend aus ca. 20 - 40 % Eisenchlorid und ca. 0,3 - 2 % HCL mit Schwefelsäure unter Überschuss von Schwefelsäure in Verbindung gebracht. Hierbei erfolgt eine Umsetzung in Eisen(II)sulfatmonohydrat und Salzsäure gemäß der Reaktionsgleichung FeCl₂ + H₂SO₄ = FeSO₄ + 2HCL. Die Temperatur im Fällreaktor 6 beträgt ca. 85°C und wird durch einen Wärmeübertrager 8 eingestellt. Die mittlere Verweildauer der Beizlösung BL im Fällreaktor 6 liegt bei ca. vier Stunden.

Da bei der Aufkonzentrierung der Beizlösung BL vor dem Fällreaktor 6 Wasser abgetrennt worden ist, kann im Fällreaktor 6 niedriger konzentrierte Schwefelsäure eingesetzt werden. Grundsätzlich sollte der Säuregehalt mindestens 60 % betragen, wobei ein Säuregehalt oberhalb von 78 % als besonders vorteilhaft angesehen wird.

Die im Fällreaktor 6 entstehende heiße Gasphase aus Inerten, Wasser und Salzsäure wird einer Absorptionskolonne 9 (HCL-Absorber) zugeführt. Dort wird im Gegenstrom mit verdünnter, kalter Salzsäure Wasser und Salzsäure ausgestrippt. Am Sumpf 10 des HCL-Absorbers 9 wird Salzsäure entnommen und durch einen Kühler 11 heruntergekühlt. Ein Teilstrom der Salzsäure wird verdünnt und wieder am Kopf 12 des HCL-Absorbers 9 eingedüst. Ein zweiter Teilstrom wird als Fertigprodukt entnommen und einem Lagertank für Salzsäure zugeführt.

Die im Fällreaktor 6 entstehende Suspension wird im Nebenstrom NS umgepumpt und über den Wärmeübertrager 8 beheizt. In der Supsension liegt Eisen(II)sulfatmonohydrat als ungelöste Komponente vor. Die Mutterlauge besteht aus einem geringen Anteil des Eisen(II)sulfats sowie aus Schwefelsäure, Salzsäure und Wasser. Die Suspension wird auf einen Bandfilter 13 gepumpt, in dem das Eisen(II)sulfatmonohydrat entfeuchtet wird. Die Mutterlauge gelangt zurück in den Fällreaktor 6. Das Eisen(II)sulfatmonohydrat wird gegebenenfalls vor dem Bandfilter 13 noch gewaschen.

Das entfeuchtete Eisen(II)sulfatmonohydrat wird anschließend einem Kristallisationsreaktor 14 zugeführt. Im Kristallisationsreaktor 14 erfolgt durch Zugabe von Wasser im Überschuss die Umwandlung von Eisen(II)sulfatmonohydrat in Eisen(II)sulfatheptahydrat nach der Reaktionsgleichung FeSO₄ + 7 H₂O = FeSO₄ · 7 H₂O. Sowohl die Verweilzeit als auch die Temperatur im Kristallisationsreaktor 12 sind vorgebbar. Für die Praxis wird von einer Verweilzeit zwischen vier und achtzehn Stunden bei einer Temperatur von 160°C - 200°C ausgegangen.

Die Suspension im Kristallisationsreaktor 12 wird abgezogen und das als Kristallisat vorliegende Eisen(II)sulfatheptahydrat in einem Bandfilter 13 vom Wasser isoliert. Man erhält ein hochwertiges lagerstabiles und riesel- bzw. fließfähiges Eisen(II)sulfatheptahydrat.

Die im Bandfilter 13 abfiltrierte Mutterlauge wird in den Kristallisationsreaktor 12 zurückgefahren. Gegebenenfalls kann das Kristallisat anschließend zusätzlich noch gewaschen werden, um den Säuregehalt zu regulieren.

### Bezugszeichen:

- 1 -: Wärmeübertrager
- 2 -: Destillationskolonne
- 3 -: Kopf v. 2
- 4 -: Kühler
- 5 -: Sumpf v. 2
- 6 -: Fällreaktor
- 7 -: Verdampfer
- 8 -: Wärmeübertrager
- 9 -: HCL-Absorber
- 10 -: Sumpf v. 9
- 11 -: Kühler
- 12 -: Kopf v. 9
- 13 -: Bandfilter
- 14 -: Kristallisationsreaktor
- 15 -: Bandfilter

- BL -: Beizlösung
- NS -: Nebenstrom

## Patentansprüche

1. Verfahren zur Gewinnung von Eisen(II)sulfatheptahydrat aus Eisen(II)-sulfatmonohydrat, **dadurch gekennzeichnet, dass** das Eisen(II)sulfatmonohydrat in einem Kristallisationsreaktor (14) mit Wasser gemischt wird und zu Eisen(II)sulfatheptahydrat als Kristallisat reagiert, das anschließend vom Wasser isoliert wird.

2. Verfahren nach Anspruch 1, **dadurch gekennzeichnet, dass** die Isolierung des Kristallisats vom Wasser durch eine Filtration erfolgt.

3. Verfahren nach Anspruch 1 oder 2, **dadurch gekennzeichnet, dass** das Kristallisat nach der Isolierung gewaschen wird.

4. Verfahren nach einem der Ansprüche 1 bis 3, **dadurch gekennzeichnet, dass** das Eisen(II)sulfatmonohydrat aus einer Beizlösung aus Eisenchlorid (FeCl₂), Salzsäure (HCl) und Wasser (H₂O) gewonnen wird.

5. Verfahren nach Anspruch 4, **dadurch gekennzeichnet, dass** die Beizlösung in einem Fällreaktor (6) mit Schwefelsäure (H₂SO₄) unter Überschuss von Schwefelsäure (H₂SO₄) zu Eisen(II)sulfatmonohydrat (FeSO₄) und Salzsäure (HCl) umgesetzt wird, wonach eine Trennung von Eisen(II)sulfatmonohydrat (FeSO₄) und Salzsäure (HCl) erfolgt, das Eisen(II)sulfatmonohydrat (FeSO₄) entfeuchtet und dem Kristallisationsreaktor (14) zugeführt wird.

6. Verfahren nach einem der Ansprüche 4 oder 5, **dadurch** gekenn- zeichnet, dass der Anteil des Eisenchlorids (FeCl₂) in der Beizlösung durch Destillation erhöht wird.

7. Verfahren nach Anspruch 6, **dadurch gekennzeichnet, dass** die Konzentrierung des Eisenchlorids (FeCl₂) in einer Destillationskolonne (2) erfolgt.

8. Verfahren nach einem der Ansprüche 4 bis 7, **dadurch** gekennzeich - net, dass der Anteil von Eisenchlorid (FeCl₂) in der Beizlösung größer oder gleich 25 % beträgt.

## Geänderte Patentansprüche

### Geänderte Patentansprüche gemäss Regel 86(2) EPÜ.

**1.** Verfahren zur Gewinnung von Eisen(II)sulfatheptahydrat aus Eisen(II)-sulfatmonohydrat, **dadurch gekennzeichnet, dass** das Eisen(II)sulfatmonohydrat aus einer Beizlösung aus Eisenchlorid (FeCl₂), Salzsäure (HCl) und Wasser (H₂O) gewonnen wird, wobei der Anteil des Eisenchlorids (FeCl₂) in der Beizlösung durch Destillation erhöht wird und dann die Beizlösung in einem Fällreaktor (6) mit Schwefelsäure (H₂SO₄) unter Überschuss von Schwefelsäure (H₂SO₄) zu Eisen(II)sulfatmonohydrat (FeSO₄) und Salzsäure (HCl) umgesetzt wird, wonach eine Trennung von Eisen(II)sulfatmonohydrat (FeSO₄) und Salzsäure (HCl) erfolgt, worauf das Eisen(II)sulfatmonohydrat (FeSO₄) entfeuchtet und einem Kristallisationsreaktor (14) zugeführt wird, in dem das Eisen(II)sulfatmonohydrat mit Wasser gemischt und zu Eisen(II)sulfatheptahydrat als Kristallisat reagiert, wonach das Kristallisat vom Wasser durch eine Filtration isoliert wird und das Kristallisat nach der Isolierung gewaschen wird.

**2.** Verfahren nach Anspruch 1, **dadurch gekennzeichnet, dass** die Konzentrierung des Eisenchlorids (FeCl₂) in einer Destillationskolonne (2) erfolgt.

**3.** Verfahren nach Anspruch 1 oder 2, **dadurch gekennzeichnet, dass** der Anteil von Eisenchlorid (FeCl₂) in der Beizlösung größer oder gleich 25 % beträgt.
